(19) Europäisches Patentamt
European Patent Office
Office européen des brevets

(11) Veröffentlichungsnummer: **0 099 334**
**B1**

(12) # EUROPÄISCHE PATENTSCHRIFT

(45) Veröffentlichungstag der Patentschrift: **14.05.86**

(51) Int. Cl.[4]: **C 08 G 59/06,** C 08 G 59/14

(21) Anmeldenummer: **83810301.8**

(22) Anmeldetag: **04.07.83**

(54) **Verfahren zur Herstellung von Epoxidharzen nach dem Advancementverfahren.**

(30) Priorität: **08.07.82 CH 4169/82**

(43) Veröffentlichungstag der Anmeldung:
**25.01.84 Patentblatt 84/4**

(45) Bekanntmachung des Hinweises auf die Patenterteilung:
**14.05.86 Patentblatt 86/20**

(84) Benannte Vertragsstaaten:
**CH DE FR GB IT LI**

(56) Entgegenhaltungen:
**WO - A - 82/01877**
**US - A - 3 444 111**

(73) Patentinhaber: **CIBA-GEIGY AG, Klybeckstrasse 141, CH-4002 Basel (CH)**

(72) Erfinder: **Fiaux, André, Dr., Chemin sous l'Eglise, CH-1867 Ollon (CH)**
Erfinder: **Nguyen, Dinh Ly, Dr., Collonges 18, CH-1820 Territet (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein Verfahren zur Herstellung von Epoxidharzen nach dem Advancementverfahren (Vorverlängerungsverfahren), das heisst, durch Umsetzung von Verbindungen, enthaltend 2 bis 4 phenolische Hydroxylgruppen, mit Polyepoxidverbindungen in stöchiometrischem Überschuss.

Derartige Verfahren sind bekannt und vielfach beschrieben, beispielsweise in der DE-OS 1 808 670 oder in der DE-OS 2 263 175 (in Anwesenheit von Ammoniumsalzen als Katalysatoren) oder in der WO-A-82/01 877 (in Anwesenheit von Phosphoniumsalzen als Katalysatoren) und verlaufen nach folgendem Schema:

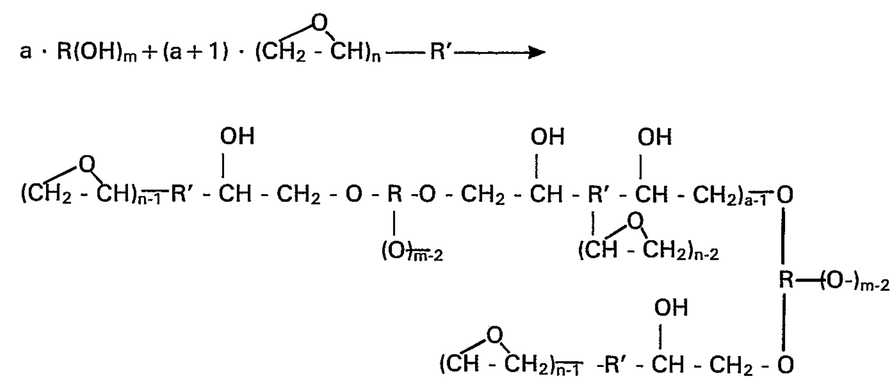

m und n bedeuten dabei unabhängig voneinander 2, 3 oder 4. Die Zahl a ist mindestens 1; mit wachsendem a nimmt auch das Molekulargewicht des Produktes zu.

Die nach diesem Verfahren hergestellten Harze werden besonders für die Oberflächenbeschichtung verwendet. Diese Harze weisen im allgemeinen eine relativ geringe Flexibilität auf. Ferner befriedigt auch ihre Haftfestigkeit nicht immer.

Epoxidhaltige Produkte, welche durch direkte Umsetzung von mehrere phenolische Hydroxylgruppen aufweisenden Verbindungen, wie z.B. Bisphenol A, mit Epihalogenhydrin in bestimmten Äquivalenzverhältnissen hergestellt werden (vgl. z.B. Chimia 16, 66-71, 1962), weisen zwar diese Nachteile nicht oder nur in geringem Masse auf; jedoch müssen bei Verwendung dieser Produkte andere Nachteile, wie gegebenenfalls störende Verunreinigungen und die mit der ungenügenden Reinheit verbundene unzureichende Qualitätssteuerung in Kauf genommen werden.

Es hat sich nun gezeigt, dass man durch Zusatz von Glycidol zu den Ausgangsprodukten Epoxidharz und mehrwertigem Phenol zu Produkten gelangt, welche die genannten Nachteile nicht aufweisen.

In der U.S. Patentschrift 3,444,111 wird die Verwendung von Epoxyalkoholen, insbesondere von Glycidol, als reaktive Verdünner zur Senkung der Viskosität von Epoxidharz-Stoffgemischen offenbart.

Das erfindungsgemässe Verfahren zur Herstellung von Epoxidharzgemischen durch Umsetzung von mehrwertigen phenolischen Verbindungen mit Epoxidverbindungen ist dadurch gekennzeichnet, dass man eine Verbindung A, welche m phenolische Hydroxylgruppen aufweist, wobei m = 2, 3 oder 4 vorzugsweise m = 2 ist, in Gegenwart eines Katalysators mit einer Verbindung B, welche im Molekül mehr als eine, vorzugsweise 2, 1,2-Epoxidgruppe(n) aufweist, und Glycidol bei Temperaturen zwischen 20 und 200°C umsetzt, wobei A und B in solchen Mengen eingesetzt werden, dass auf 1 Epoxidgruppe 0,01 bis 0,99 phenolische Hydroxylgruppen kommen, und wobei die Menge Glycidol mindestens 1 Mol % pro Mol der Verbindung A betragen muss und höchstens gleich

$$\frac{(m-1) \cdot 74}{m} \cdot \frac{(\text{Menge von A})}{(\text{Mol. gew. von A})} \quad \text{ist.}$$

Vorzugsweise erfolgt die Umsetzung in Gegenwart eines nukleophilen Katalysators, wie solche aus der FR-Patentschrift 70.34479 (Publikationsnummer 2 063 025) bekannt sind, wie Imidazole, Benzimidazole, Imidazoline, Dihydropyrimidine, Tetrahydropyrimidine, Dihydrochinazoline, insbesondere Methyl- oder Phenylimidazol, vorzugsweise 2-Phenyl-imidazol.

Als Katalysatoren können auch eingesetzt werden Alkali- oder Erdalkalimetallhydroxide, vorzugsweise Natriumhydroxid, sowie Alkali- oder Erdalkalimetallalkoholate der Formel $X^{n\oplus} (OR^{\ominus})_n$, worin X das Alkali- oder Erdalkalimetallion ist, R ein $C_1$-$C_{12}$-Alkyl, besonders $C_1$-$C_4$-Alkyl ist, und n die Ladung des Alkali- oder Erdalkalimetallions ist; Natriummethylat ist besonders bevorzugt. Weiterhin können als Katalysatoren erfindungsgemäss quarternäre Ammoniumsalze, vorzugsweise Hydroxide oder Halogenide der Formel

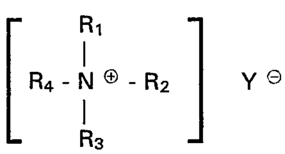

angewendet werden, worin $R_1$, $R_2$ und $R_3$ unabhängig voneinander unsubstituiertes oder gegebenenfalls durch OH-Gruppen substituiertes Alkyl mit 1-16 C-Atomen, und $R_4$ Alkyl mit 1-16 C-Atomen, Phenyl oder Benzyl darstellen, und Y Hydroxyl oder Halogen ist. Solche Katalysatoren werden z.B. in der GB Patentschrift No. 1 364 804 beschrieben. Bevorzugt werden Tetralkylammoniumsalze, besonders Tetramethylammoniumsalze. Schliesslich können als Katalysatoren auch Phosphoniumhalogenide der Formel

$$\left[\begin{array}{c} R_1 \\ | \\ R_4 - P^{\oplus} - R_2 \\ | \\ R_3 \end{array}\right] \quad Z^{\ominus}$$

verwendet werden, worin Z ein Halogenatom, wie Chlor, Brom oder Iod ist, und $R_1$, $R_2$, $R_3$ und $R_4$ unabhängig voneinander einwertige Kohlenwasserstoffgruppen sind. $R_1$, $R_2$ und $R_3$ sind vorzugsweise Alkyl, Cycloalkyl, Aryl, Alkaryl und Arylalkyl mit je höchstens 25 C-Atomen, besonders bevorzugt mit je bis zu 18 C-Atomen, wie z.B. Phenyl, Butyl, Octyl, Lauryl, Hexadecyl oder Cyclohexyl. $R_4$ ist vorzugsweise eine Alkylgruppe mit 1-10 C-Atomen, insbesondere 1-4 C-Atomen, wie z.B. Methyl, Äthyl, Propyl, n-Butyl, sec.-Butyl und n-Decyl. Einige Beispiele für die Phosphoniumhalogenide als Katalysatoren sind Methyltriphenylphosphoniumiodid, Ethyltriphenylphosphoniumiodid, Propyltriphenylphosphoniumiodid, n-Butyltriphenylphosphoniumiodid, n-Decyltriphenylphosphoniumiodid, Methyltributylphosphoniumiodid, Ethyltriphenylphosphoniumchlorid und Ethyltriphenylphosphoniumbromid, wobei $C_{1-4}$-Alkyltriphenylphosphoniumiodide besonders bevorzugt sind. Solche Katalysatoren werden z.B. in der GB Patentschrift 1 204 760 beschrieben. Als Katalysatoren kommen auch Phosphorverbindungen in Frage die in den folgenden Patentschriften beschrieben sind: US 3 547 881, US 4 048 141, US 4 132 706, GB 1 398 197 und GB 1 485 345.

Der am meisten bevorzugte Katalysator ist 2-Phenylimidazol.

Die angewendeten Mengen des Katalysators können in einem breiten Bereich variiert werden, und sind vorzugsweise zwischen 0,0001 und 10 Gew.-%, besonders bevorzugt zwischen 0,0002 und 5 Gew.-%, und ganz besonders bevorzugt zwischen 0,0005 und 1 Gew.-%, bezogen auf die Gesamtmenge der Edukte.

Als Ausgangsmaterial A können alle in der Methodik der Vorverlängerung bekannten aromatischen Verbindungen mit 2 bis 4 phenolischen Hydroxylgruppen verwendet werden. Beispielsweise seien genannt: einkernige Diphenole (wie Resorcin) oder Triphenole (Phloroglucin), die auch substituiert sein können, Naphthaline mit 2, 3 oder 4 Hydroxylgruppen, wie 1,4-Dihydroxy-naphthalin, Biphenyle und andere zweikernige aromatische Verbindungen, die eine Methylen-, Isopropylen-, O-, $SO_2$-, S- oder NR-Brücke (R = H oder niederes Alkyl oder Phenyl) aufweisen und 2 bis 4 Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A. Weitere Verbindungen sind Novolake auf Phenol- oder Kresolbasis.

Als Epoxidverbindungen B kommen vor allem solche in Frage, deren Molekulargewicht relativ niedrig ist, z.B. kleiner als 3 500, insbesondere kleiner als 2 000, bevorzugt zwischen 175 und 350. Bei den verwendeten Di-, Tri- oder Tetraglycidylverbindungen kann es sich um Äther oder Ester handeln; ferner können die Glycidylgruppen auch an Stickstoffatome geknüpft sein. Als Phenole, welche den Äthern zugrunde liegen können, können die für A genannten Verwendung finden. Im weiteren kommen aliphatische Di-, Tri- oder Tetrahydroxyverbindungen in Betracht, z.B. 1,4-Butandiol oder Polyätherglykol. Als Basis für die Polyglycidylester dienen beispielsweise die Phthalsäure, Terephthalsäure, Tetrahydrophthalsäure, Hexahydrophthalsäure, Adipinsäure, Trimethyladipinsäure oder Sebazinsäure. Ferner kommen ein- oder mehrkernige Hydantoine mit Glycidylgruppen an den Stickstoffatomen und gegebenenfalls an der zwei Hydantoinkerne verbindenden Brücke über Sauerstoff gebunden, wie N,N'-Diglycidyl-hydantoine, 1,3-Di-(1-glycidyl-5,5-dimethyl-hydantoinyl-1)-2-glycidyloxy-propan, ferner auch 1-Glycidyl-3-(2,3-diglycidyloxy-propyl-1)-5,5-dimethyl-hydantoin in Frage. Andere Glycidylverbindungen von Stickstoff enthaltenden Ringen sind solche von 5,6-Dihydrourazilen, Barbitursäuren, Cyanursäuren oder Isocyanursäuren, wie Triglycidylisocyanursäure.

Die am meisten bevorzugte Ausführungsweise besteht darin, dass man Bisphenol A mit dem Diglycidyläther von Bisphenol A zusammen mit Glycidol umsetzt.

Die Menge des Ausgangsstoffes A hängt davon ab, was für ein Produkt gewünscht wird. Je grösser sie ist, desto höher wird das Molekulargewicht des Endproduktes im allgemeinen sein. Dabei wird auch der Schmelzpunkt ansteigen und werden sich die physikalischen und chemischen Eigenschaften des gewonnenen Harzes ändern.

Die Mindestmenge des als Kettenabbrecher verwendeten Glycidols ist 1 Mol% pro Mol der Verbindung A, und die Höchstmenge ist umgekehrt proportional zum Molekulargewicht des mehrwertigen Phenols, proportional zum Molekulargewicht des Glycidols (74) und der verwendeten Menge des mehrwertigen Phenols. Das Produkt aus diesen Faktoren ist noch mit 1/2, 2/3 oder 3/4 zu multiplizieren. je nachdem ob die phenolische Verbindung 2, 3 oder 4 phenolische Hydroxylgruppen aufweist.

Die Umsetzung kann in 5-95%igen Lösungen der Reaktionsteilnehmer durchgeführt werden. Als Lösungsmittel kommen z.B. Toluol, Xylol, Methyläthylketon, Methylisobutylketon, Äthylglykolacetat, Butylacetat, Amylalkohol, Dioxan, 2-Methoxy-äthanol, 2-Äthoxyäthanol, Diäthylenglykol-mono-n-butyläther (= Butylcarbitol) in Frage; vorzugsweise werden jedoch die flüssigen bzw. verflüssigten Edukte ohne Zusatz eines Lösungsmittels miteinander versetzt. Bevorzugte Reaktionstemperaturen liegen zwischen 120 und 180°C.

Bei Verwendung eines Katalysators muss dieser langsam zugegeben werden, um ein zu starkes Ansteigen der Temperatur des exotherm reagierenden Gemisches zu vermeiden. Vorzugsweise arbeitet man unter Stickstoff. Nach einigen Stunden ist die Reaktion beendet. Neben den vorverlängerten Epoxidverbindungen mit mindestens zwei Epoxidgruppen im Molekül, welche aus der Umsetzung entstandene sekundäre Hydroxylgruppen aufweisen, werden auch Produkte gebildet, welche neben einer oder

mehreren Epoxidgruppen (die Anzahl hängt von der Art des Ausgangsharzes sowie von den Mengenverhältnissen ab) auch α-Glykolgruppen enthalten, welche von der Umsetzung der Verbindung A oder des Addukts aus den Verbindungen A und B mit dem als Kettenabbrecher wirkenden Glycidol herstammen. Die gehärteten Endprodukte (hergestellt durch Vernetzen mit üblichen Härtungsmitteln für Epoxidharze, wie Säureanhydride, Polyamine, mehrwertige Phenole usw.) weisen gute Flexibilität auf.

Die Produkte können für den Oberflächenschutz, zur Herstellung von Giesslingen, insbesondere auf dem Elektrogebiet, von Prepregs und Laminaten verwendet werden. Sie können auch auf dem Gebiet der Photopolymerisation und als Lötstop- und Isolationslacke verwendet werden.

*Beispiel 1*

160 kg einer Epoxidverbindung aus Bisphenol A und Epichlorhydrin mit einem Epoxidgehalt von 5,3 Äquivalenten pro kg und einem Gehalt von hydrolysierbarem Chlor unter 0,1 Gewichtsprozent werden in einem 250 Liter fassenden Reaktor aus Stahl gegeben. Die Temperatur wird auf 80°C erhöht und die Masse mit 40 U/Min. gerührt. Durch den Reaktor wird nun ein Stickstoffstrom geleitet, wobei die Temperatur auf 100°C erhöht wird. Darauf werden 62 kg (3/4 der Gesamtmenge) Bisphenol A und 2,95 kg Glycidol dazugegeben. Danach werden 50 ml einer Lösung von 7,5 g 2-Phenyl-imidazol in Butanol dazugefügt. Während der nächsten 30 Minuten steigt die Temperatur auf 180°C. Dann gibt man 21 kg Bisphenol A zu und erwärmt das etwas abgekühlte Gemisch wieder auf 180°C. Man hält das Gemisch bei dieser Temperatur unter fortwährendem Rühren während 3 Stunden, wobei nach 30 Minuten der Stickstoffstrom abgestellt wird und das Gefäss langsam unter Vakuum bis etwa 67 mbar gesetzt wird. Wenn eine Probe einen Epoxidgehalt von 0,57-0,60 Äquivalenten pro kg zeigt, wird der Reaktor entladen. Die Ausbeute beträgt 246 kg. Eine 40%ige Lösung in Butylcarbitol hat bei 25°C eine Viskosität von 2 000 mPa s. Der α-Glykolgehalt ist 0,35 Äquivalente pro kg.

*Beispiel 2*

173 kg einer Epoxidverbindung aus Bisphenol A und Epichlorhydrin mit einem Epoxidgehalt von 5,3 Äquivalenten pro kg und einem Gehalt an hydrolysierbarem Chlor unter 0,1 Gew.-% werden in einem 250 Liter fassenden Reaktor aus Stahl gegeben. Die Temperatur wird auf 50°C erhöht. Dann gibt man innerhalb von 10 Minuten 0,2 kg 50%ige Natronlauge zu, und rührt während 15 Minuten. Anschliessend gibt man 73,8 kg Bisphenol A zu. Bei 80°C wird das Reaktionsgemisch unter Vakuum mit Stickstoff entlüftet, wobei die Temperatur auf 100°C erhöht wird. Unter fortwährendem Rühren gibt man innerhalb von 10 Minuten 2,9 kg Glycidol zu. Im Verlaufe der exothermen Reaktion steigt die Temperatur auf 170-190°C an.

Wenn eine Probe des Reaktionsgemisches einen Epoxidgehalt zwischen 1,15 und 1,22 Äquivalenten pro kg zeigt, wird der Reaktor entladen. Die Ausbeute beträgt 249 kg. Eine 40%ige Lösung des Reaktionsproduktes in Butylcarbitol hat bei 25°C eine Viskosität von 750 mPa s. Der α-Glykolgehalt beträgt 0,3 Äquivalente pro kg.

*Beispiel 3*

200 kg einer Epoxidverbindung aus Bisphenol A und Epichlorhydrin mit einem Epoxidgehalt von 5,3 Äquivalenten pro kg und einem Gehalt an hydrolysierbarem Chlor unter 0,1 Gew.-% werden in einem 250 Liter fassenden Reaktor aus Stahl gegeben. Die Temperatur wird auf 50°C erhöht. Dann gibt man innerhalb von 10 Minuten 0,5 kg einer Natriummethylatlösung (6,5 Gew.-% Natrium in Methanol) zu und rührt während 10 Minuten. Anschliessend gibt man 46,9 kg Bisphenol A zu. Bei 80°C wird das Reaktionsgemisch unter Vakuum mit Stickstoff entlüftet, wobei die Temperatur auf 100°C erhöht wird. Unter fortwährendem Rühren gibt man innerhalb von 10 Minuten 3 kg Glycidol zu. Im Verlaufe der exothermen Reaktion steigt die Temperatur auf 150-180°C an.

Wenn eine Probe des Reaktionsgemisches einen Epoxidgehalt zwischen 2,55 und 2,7 Äquivalenten pro kg zeigt, wird der Reaktor entladen. Die Ausbeute beträgt 249 kg. Das erhaltene Harz hat bei 120°C eine Viskosität von 600 mPa s. Der α-Glykolgehalt beträgt 0,3 Äquivalent pro kg.

*Beispiel 4*

163 kg einer Epoxidverbindung aus Bisphenol A und Epichlorhydrin mit einem Epoxidgehalt von 5,3 Äquivalenten pro kg und einem Gehalt an hydrolysierbarem Chlor unter 0,1 Gew.-% werden in einem 250 Liter fassenden Reaktor aus Stahl gegeben. Die Temperatur wird auf 40°C erhöht. Dann gibt man innerhalb von 10 Minuten 0,3 kg einer 5 gew.-%igen Lösung von Äthyltriphenylphosphoniumchlorid in Aceton zu und rührt während 10 Minuten. Anschliessend gibt man 65 kg Bisphenol A zu. Bei 80°C wird das Reaktionsgemisch unter Vakuum mit Stickstoff entlüftet, wobei die Temperatur auf 100°C erhöht wird. Unter fortwährendem Rühren gibt man innerhalb von 10 Minuten 3 kg Glycidol zu. Im Verlaufe der exothermen Reaktion steigt die Temperatur auf 150-180°C an.

Wenn eine Probe des Reaktionsgemisches einen Epoxidgehalt zwischen 0,55 und 0,6 Äquivalenten pro kg zeigt, wird der Reaktor entladen. Die Ausbeute beträgt 231 kg. Eine 40%ige Lösung des Reaktionsproduktes in Butylcarbitol hat bei 25°C eine Viskosität von 1'500 mPa s. Der α-Glykolgehalt beträgt 0,3 Äquivalent pro kg.

**Patentansprüche**

1. Verfahren zur Herstellung von Epoxidharzgemischen durch Umsetzung von mehrwertigen phenolischen Verbindungen mit Epoxidverbindungen, dadurch gekennzeichnet, dass man

eine Verbindung A, welche m phenolische Hydroxylgruppen aufweist, wobei m = 2, 3 oder 4 ist, in Gegenwart eines Katalysators mit einer Verbindung B, die im Molekül mehr als eine 1,2-Epoxidgruppe enthält, und

Glycidol bei Temperaturen zwischen 20 und 200°C umsetzt, wobei A und B in solchen Mengen eingesetzt werden, dass auf 1 Epoxidgruppe 0,01 bis 0,99 phenolische Hydroxylgruppen kommen, und wobei die Menge Glycidol mindestens 1 Mol % pro Mol der Verbindung A betragen muss und höchstens gleich

$$\frac{(m-1) \cdot 74}{m} \cdot \frac{(\text{Menge von A})}{(\text{Mol. gew. von A})} \text{ ist.}$$

2. Verfahren gemäss Anspruch 1, dadurch gekennzeichnet, dass man die Umsetzung bei Temperaturen von 120 bis 180°C durchführt.

3. Verfahren gemäss Anspruch 1, dadurch gekennzeichnet, dass man die flüssigen bzw., verflüssigten Edukte ohne Zusatz eines Lösungsmittels miteinander umsetzt.

4. Verfahren gemäss Anspruch 1, dadurch gekennzeichnet, dass man die Umsetzung in Gegenwart eines nukleophilen Katalysators durchführt.

5. Verfahren gemäss Anspruch 4, dadurch gekennzeichnet, dass der Katalysator Natriumhydroxid, Natriummethylat oder ein $C_{1-4}$-Alkyltriphenylphosphoniumiodid ist.

6. Verfahren gemäss Anspruch 4, dadurch gekennzeichnet, dass der Katalysator 2-Phenylimidazol ist.

7. Verfahren gemäss Anspruch 1, dadurch gekennzeichnet, dass man eine Verbindung A verwendet, worin m = 2 ist.

8. Verfahren gemäss Anspruch 1, dadurch gekennzeichnet, dass man eine Verbindung B verwendet, welche 2 Epoxidgruppen im Molekül aufweist.

9. Verfahren gemäss den Ansprüchen 7 und 8.

10. Verfahren gemäss Anspruch 9, dadurch gekennzeichnet, dass man Bisphenol A mit dem Diglycidyläther von Bisphenol A zusammen mit Glycidol umsetzt.

**Claims**

1. A process for the preparation of an epoxide resin mixture by reacting a polyhydric phenolic compound with an epoxide compound, which comprises reacting a compound A containing m phenolic hydroxyl groups, m being 2, 3 or 4, with a compound B containing more than one 1,2-epoxide group in the molecule, and glycidol in the presence of a catalyst and in the temperature range from 20 to 200°C, A and B being used in amounts such that 0.01 to 0.99 phenolic hydroxyl groups are present per epoxide group, and the amount of glycidol being at least 1 mol% per mol of compound A and not more than

$$\frac{(m-1) \cdot 74}{m} \cdot \frac{(\text{amount of A})}{(\text{molecular weight of A})}$$

2. A process according to claim 1, wherein the reaction is carried out in the temperature range from 120 to 180°C.

3. A process according to claim 1, wherein the liquid or liquefied reactants are reacted with one another without addition of a solvent.

4. A process according to claim 1, wherein the reaction is carried out in the presence of a nucleophilic catalyst.

5. A process according to claim 4, wherein the catalyst is sodium hydroxide, sodium methylate or a $C_{1-4}$ alkyltriphenylphosphonium iodide.

6. A process according to claim 4, wherein the catalyst is 2-phenylimidazole.

7. A process according to claim 1, which comprises the use of a compound A in which m is 2.

8. A process according to claim 1, which comprises the use of a compound B which contains 2 epoxide groups in the molecule.

9. A process according to either of claims 7 or 8.

10. A process according to claim 1, wherein bisphenol A is reacted with the diglycidyl ether of bisphenol A, together with glycidol.

**Revendications**

1. Procédé de préparation de mélanges à base de résines époxydiques par réaction de composés polyphénoliques avec des composés époxydiques, procédé caractérisé en ce qu'on fait réagir, à une température comprise entre 20 et 200°C, un composé A contenant m radicaux hydroxy phénoliques, m étant un entier égal à 2, à 3 ou à 4, en présence d'un catalyseur, avec un composé B dont la molécule renferme plus d'un radical époxy-1,2, et avec du glycidol, les composés A et B étant mis en jeu en des quantités telles qu'il y ait, pour 1 radical époxy, de 0,01 à 0,99 radical hydroxy, et la quantité du glycidol devant être d'au moins 1 mol % par mole du composé A et étant au plus égale à:

$$\frac{(m-1) \cdot 74}{m} \cdot \frac{(\text{quantité de A})}{(\text{masse mol. de A})}$$

2. Procédé selon la revendication 1 caractérisé en ce qu'on effectue la réaction à des températures de 120 à 180°C.

3. Procédé selon la revendication 1 caractérisé en ce qu'on fait réagir les corps de départ liquides ou liquifiés sans ajouter de solvant.

4. Procédé selon la revendication 1 caractérisé en ce qu'on effectue la réaction en présence d'un catalyseur nucléophile.

5. Procédé selon la revendication 4 caractérisé en ce que le catalyseur est l'hydroxyde de sodium, le méthylate de sodium ou un iodure d'alkyl-triphénylphosphonium dont l'alkyle contient de 1 à 4 atomes de carbone.

6. Procédé selon la revendication 4 caractérisé en ce que le catalyseur est le phényl-2 imidazole.

7. Procédé selon la revendication 1 caractérisé en ce qu'on utilise un composé A dans lequel m est égal à 2.

8. Procédé selon la revendication 1 caractérisé en ce qu'on utilise un composé B qui contient 2 radicaux époxy dans sa molécule.

9. Procédé selon les revendications 7 et 8.

10. Procédé selon la revendication 9 caractérisé en ce qu'on fait réagir le bis-phénol A avec l'éther diglycidylique du bis-phénol A et avec le glycidol.